# FASCICULE DE BREVET EUROPEEN

(11) **EP 2 422 063 B1**
(45) Date de publication et mention de la délivrance du brevet: **20.04.2016**
(21) Numéro de dépôt: 10715537.6
(22) Date de dépôt: 22.04.2010
(51) Int. Cl.: F02C 7/32, F16L 3/00

(54) **SUPPORT MONOBLOC D'EQUIPEMENTS EN AERONAUTIQUE**
EINSTÜCKIGES STÜTZTEIL FÜR DIE LUFTFAHRTINDUSTRIE
ONE-PIECE MOUNTING FOR AERONAUTICAL APPARATUSES

(30) Priorité: 24.04.2009 FR 0952686
(43) Date de publication de la demande: 29.02.2012
(73) Titulaire: Snecma, 75015 Paris (FR)
(72) Inventeur: ZIEGLER, Michel, Henri, F-91810 Vert Le Grand (FR)
(74) Mandataire: Ilgart, Jean-Christophe
(86) Numéro de dépôt international: PCT/EP2010/055381
(87) Numéro de publication internationale: WO 2010/122120

(56) Documents cités:
- FR-A- 1 421 082
- FR-A- 1 447 295
- FR-A1- 2 914 275
- US-A- 3 414 219
- US-A- 5 240 342
- US-A1- 2006 254 192

## Description

L'invention présente a pour sujet un support d'équipements en aéronautique qui soit monobloc.

Les appareils aéronautiques comme les turbomachines comprennent souvent une quantité d'équipements auxiliaires les entourant, notamment des câbles électriques d'alimentation ou de transmission de signaux et de commandes, ainsi que des canalisations de transport de fluides, qui doivent être maintenues près de l'appareil. On utilise typiquement des supports coudés, dont un côté est fixé à la structure de l'appareil par des boulons et dont l'autre extrémité porte les câbles, canalisations et autres par des colliers de serrage, des paires de lames élastiques ou d'autres moyens. Ces supports étant généralement réalisés en pliant des plaques de tôles, leur rigidité est faible et ils doivent être renforcés par des nervures jointes aux deux côtés de la tôle par des arêtes. La nervure est traditionnellement soudée à la plaque par un cordon continu ou par points, ce qui a l'inconvénient d'augmenter beaucoup le temps de fabrication et d'enchérir ces supports.

Un support d'équipements en aéronautique, comprenant une bride de raccordement à une structure porteuse, une console d'attache des équipements et une pièce de renfort intermédiaire, la bride, la pièce de renfort et la console étant formées d'une seule plaque de tôle pliée (d'où le caractère monobloc du support), la pièce de renfort étant composée de deux nervures s'étendant chacune entre la bride et la console en y étant jointes par des raccords coudés, essentiellement dans des directions obliques non perpendiculaires à un plan principal d'extension de la bride et à un plan principal d'extension de la console, la console et la bride étant dépourvues de jonction autre que les nervures et les nervures se raccordent de part et d'autre de la console, est aussi décrit dans le document FR-2 914 275-A.

Les nervures soudées sont ainsi remplacées par des nervures pleinement incorporées au reste du support. Comme elles sont au nombre de deux de part et d'autre de la console, elles permettent une bonne répartition des efforts et donc une solidité suffisante du support. Comme les opérations de fabrication se limitent à un découpage d'une tôle et au pliage de l'ébauche du support ainsi découpée, la fabrication du support est facile et rapide. On doit toutefois admettre que les nervures de ce document, devant être pliées pour avoir une section coudée alors qu'elles sont reliées de façon continue à une console et une bride qui doivent rester planes, sont responsables d'une complication importante de fabrication.

Un but fondamental de l'invention est encore de proposer un support d'équipements en aéronautique de structure plus simple, en pratique d'une seule plaque de tôle pliée, sans aucune soudure, sans que la résistance aux efforts soit compromise.

Le préambule de la revendication indépendante est fondé sur le contenu de US 2006/254192 Al, qui n'est toutefois pas relatif à l'aéronautique.

Sous une forme générale, l'invention concerne ainsi un support d'équipements en aéronautique, comprenant une bride de raccordement à une structure porteuse, une console d'attache des équipements et une pièce de renfort intermédiaire, la bride, la pièce de renfort et la console étant formées d'une seule plaque de tôle pliée, la pièce de renfort étant composée de deux nervures s'étendant chacune entre la bride et la console en y étant jointes par des raccords coudés, essentiellement dans des directions obliques non perpendiculaires à un plan principal d'extension de la bride et à un plan principal d'extension de la console, la console et la bride étant dépourvues de jonction autre que les nervures et les nervures se raccordant de part et d'autre de la console, les nervures étant planes et lesdits plans principaux d'extension de la bride et de la console étant perpendiculaires entre eux les nervures s'étendant dans des directions concourantes en faisant un angle non plat, la console comprend une pluralité de moyens d'attache de l'équipement, caractérisé en ce que la console s'étend avec une extension principale en direction perpendiculaire au plan de la bride et de part et d'autre de la bride, et les nervures s'élargissent vers la console.

Les nervures soudées sont ainsi remplacées par des nervures pleinement incorporées au reste du support. Comme elles sont au nombre de deux de part et d'autre de la console, elles permettent une bonne répartition des efforts et donc une solidité suffisante du support. Comme les opérations de fabrication se limitent à un découpage d'une tôle et au pliage de l'ébauche du support ainsi découpée, la fabrication du support est facile et rapide.

La résistance du support est améliorée puisque les nervures sont planes et lesdits plans principaux d'extension de la bride et de la console sont perpendiculaires entre eux.

L'invention sera maintenant décrite plus en détail au moyen des figures suivantes :
- la figure 1 est une vue d'une conception conforme à l'art antérieur exposé au commencement,
- les figures 2 et 4 illustrent deux réalisations de support n'appartenant pas à l'invention,
- et la figure 3 représente une réalisation possible de l'invention.

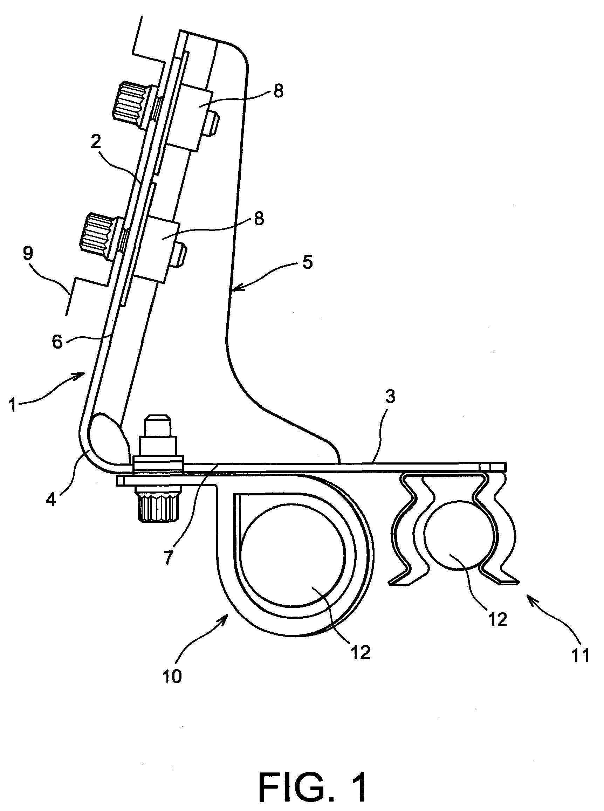

Le support de la figure 1 comprend une plaque principale 1 composée d'un premier côté 2 et d'un second côté 3 réunis à un angle 4 selon une disposition en équerre ou d'une autre valeur d'angle. Les côtés 2 et 3 sont encore réunis par une nervure 5 de renfort qui s'appuie sur eux par deux arêtes, respectivement 6 et 7. La liaison se fait par des soudures. Un des côtés 2 est une bride qui comprend des boulons 8 de fixation à une structure 9 d'un appareil aéronautique, et le second côté 3 est une console qui porte, dans cette réalisation particulière, un collier de serrage 10 et une agrafe de serrage 11 à deux lames élastiques opposées pour retenir des câbles ou des canalisations 12.

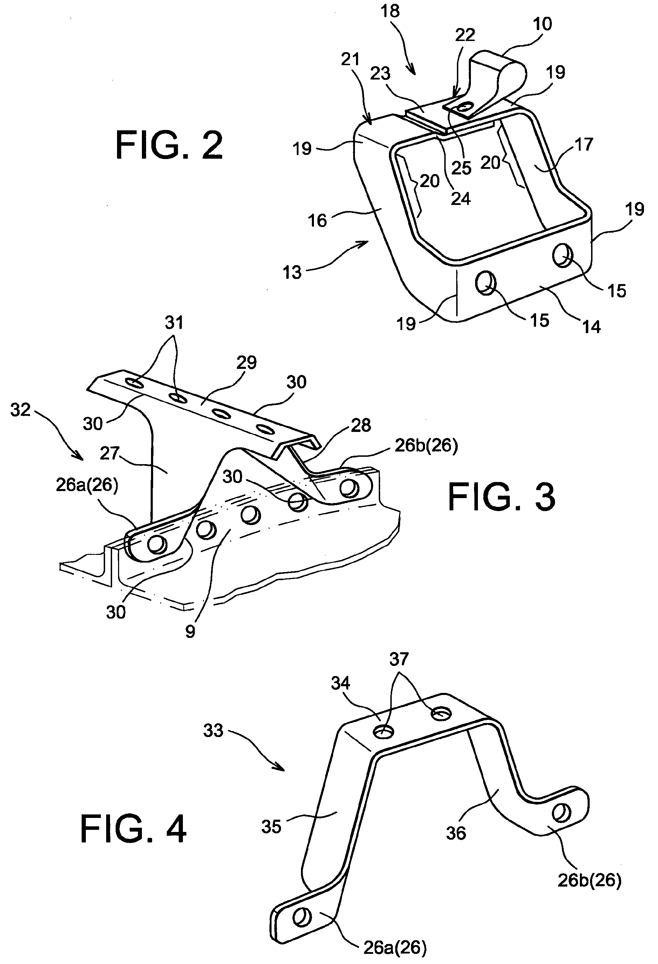

Le support de la figure 2 est composé d'une seule plaque de tôle 13 pliée après avoir été découpée. Elle forme une partie de bride 14 pour la fixation à la structure 9 non représentée ici, qui comprend des trous 15 de boulon pour la fixation. On trouve ensuite une paire de nervures 16 et 17, une console 18 portant les équipements d'attache des câbles et des canalisations, comme le collier 10. Les nervures 16 et 17 sont chacune reliées à la bride 14 et à la console 18 par des raccords 19 qui correspondent aux plis de la tôle. Ces raccords sont ici sensiblement des coudes à angle droit, et les nervures 16 et 17 sont incurvées en un quart de cercle à peu près. On obtient donc un support où la bride 14 s'étend dans un plan vertical (d'après la figure 2), la console 18 dans un plan horizontal, et les nervures 16 et 17 dans des plans verticaux perpendiculaires aux précédents avec des portions principales 20 s'étendant obliquement, mais avec une faible inclinaison par rapport à la verticale. La console 18 est composée des extrémités de la plaque de tôle, qui forment des portions convergentes 21 et 22 se chevauchant à une jonction 23. La jonction peut se faire sans ou avec un décrochement 24 de l'une des extrémités 21. Les extrémités 21 et 22 sont munies d'un trou 25 de boulon à la jonction 23, afin de les visser l'une à l'autre ainsi qu'au collier 10. Les plans des nervures 16 et 17 peuvent être parallèles ou non, et selon le cas le support 13 a une forme projetée générale en rectangle ou en trapèze, avec la console 18 et la bride 14 de largeurs égales ou non ; ce n'est pas critique pour les propriétés du support 13.

Ce support à corde fermée et en forme de caisson (évidé) est particulièrement rigide même avec une tôle assez mince, grâce entre autres à une bonne reprise des efforts produits sur le collier 10 par les nervures 15 et 17, qui sont situées symétriquement de part et d'autre de lui, ou un faible porte-à-faux par rapport à la bride 14 grâce à la faible inclinaison de leurs portions principales 20 ; et les raccords 19 sont continus et arrondis. Tout cela produit peu de concentration de contraintes, et aucune zone faible n'existe.

Ces propriétés se retrouvent dans un mode de réalisation possible de l'invention, présenté à la figure 3. Le support 32 de la figure 3 comprend comme précédemment une bride 26, une paire de nervures 27 et 28 et une console 29. Ces éléments sont joints entre eux par des raccords 30 coudés de la même façon qu'à la figure 2, de manière que les nervures 27 et 28 soient reliées par leurs extrémités à la bride 26 et à la console 29 et que ces dernières soient séparées l'une de l'autre et dépourvues d'autre liaison entre elles.

Voici les principales différences avec la réalisation de la figure 2. La bride 26 est d'abord réalisée sous forme de deux pattes 26a et 26b séparées l'une de l'autre et s'étendant dans des directions divergentes à partir de leurs raccords 30 aux nervures 27 et 28 respectives. Les plans des nervures 27 et 28 ne sont plus perpendiculaires à celui de la console 29, mais obliques à lui de sorte qu'elles convergent l'une vers l'autre en formant un angle aigu à partir des pattes 26a et 26b, le support 32 ayant une forme générale de trapèze. Par contre l'obliquité des nervures 27 et 28 par rapport à la bride 26 n'existe plus ; elles s'élèvent à côté du plan de la bride 26, sans s'éloigner de lui. La console 29 est ici continue et unitaire. Elle s'étend avec une grande extension en direction perpendiculaire au plan de la bride 26 et de part et d'autre de celui-ci, ce qui évite le porte-à-faux et permet un nombre plus important de trous de boulon 31 que dans la réalisation précédente. Les nervures 27 et 28 s'élargissent vers la console 29 pour mieux la soutenir.

Quoique cette réalisation diffère extérieurement beaucoup de la précédente, les propriétés favorables de celle-ci sont sauvegardées, les extrémités de la plaque pliée étant simplement placées à la bride 26 plutôt qu'à la console 29. Il n'y pas de perte de cohésion par rapport à la réalisation précédente même si le support 25 n'est plus à structure fermée, puisque la structure 9 assure la jonction entre les pattes 26a et 26b. Et un support ferme de la console 29 est obtenu encore si les nervures 27 et 28 ne sont pas parallèles entre elles mais convergentes. L'extension principale de la console 29 dans une direction perpendiculaire à la bride 26, plutôt que parallèle à elle comme cela était le cas à la figure 2, ne nuit pas non plus à la stabilité du support puisque son porte-à-faux moyen par rapport à la bride 26 est faible.

Un autre mode (non revendiqué) de réalisation de support 33 sera maintenant décrit au moyen de la figure 4. Il ressemble à celui de la figure 3, si ce n'est que la console, maintenant 34, s'étend principalement dans la même direction que la bride 26, et que les nervures, maintenant 35 et 36, ne s'élargissent pas vers elle. Ce support 33 de construction simple et peu encombrant convient au soutien d'un plus petit nombre d'éléments sous peine d'avoir un allongement excessif. Il peut comprendre encore une pluralité de trous de boulon 37 alignés essentiellement dans la direction d'extension de la bride 26.

## Revendications

1. Support (32) d'équipements (12) en aéronautique, comprenant une bride (26) de raccordement à une structure (9) porteuse, une console (29) d'attache des équipements et une pièce de renfort intermédiaire, la bride, la pièce de renfort et la console étant formées d'une seule plaque de tôle pliée, la pièce de renfort étant composée de deux nervures (27, 28) s'étendant chacune entre la bride et la console en y étant jointes par des raccords coudés (30), essentiellement dans des directions obliques non perpendiculaires à un plan principal d'extension de la bride (26) et à un plan principal d'extension de la console (29), la console et la bride étant dépourvues de jonction autre que les nervures et les nervures se raccordant de part et d'autre de la console, les nervures étant planes et lesdits plans principaux d'extension de la bride et de la console étant perpendiculaires entre eux, les nervures (27, 28) s'étendant dans des directions concourantes en faisant un angle non plat, la console comprend une pluralité de moyens (31) d'attache de l'équipement, **caractérisé en ce que** la console s'étend avec une extension principale en direction perpendiculaire au plan de la bride et de part et d'autre de la bride, et les nervures (27, 28) s'élargissent vers la console(29).

2. Support d'équipement en aéronautique selon la revendication 1, **caractérisé en ce que** la bride (26) est divisée en deux portions disjointes (26a, 26b) entre elles et respectivement jointes aux nervures.

3. Support d'équipements en aéronautique selon la revendication 2, **caractérisé en ce que** les portions s'étendent dans des directions divergentes à partir des raccords aux nervures.

## Patentansprüche

1. Halter (32) für Einrichtungen (12) in der Luftfahrt, umfassend einen Flansch (26) zum Anschließen an eine Tragstruktur (9), eine Konsole (29) zum Befestigen der Einrichtungen und ein Zwischenverstärkungsteil, wobei der Flansch, das Verstärkungsteil und die Konsole von einer einzigen gebogenen Blechplatte gebildet sind, wobei das Verstärkungsteil aus zwei Rippen (27, 28) besteht, die sich jeweils zwischen dem Flansch und der Konsole, durch gebogene Verbindungsstücke (30) hieran angebracht, im Wesentlichen in schrägen Richtungen, die zu einer Haupterstreckungsebene des Flansches (26) und zu einer Haupterstreckungsebene der Konsole (29) nicht senkrecht sind, erstrecken, wobei die Konsole und der Flansch keine andere Verbindung als die Rippen aufweisen und die Rippen auf beiden Seiten der Konsole anschließen, wobei die Rippen eben sind und die Haupterstreckungsebenen des Flansches und der Konsole zueinander senkrecht sind, wobei die Rippen (27, 28) unter Bildung eines nicht flachen Winkels sich in zusammenlaufenden Richtungen erstrecken, die Konsole umfasst eine Vielzahl von Mitteln (31) zum Befestigen der Einrichtung, **dadurch gekennzeichnet, dass** die Konsole sich mit einer Haupterstreckung in zu der Ebene des Flansches senkrechter Richtung sowie auf beiden Seiten des Flansches erstreckt und die Rippen (27, 28) sich in Richtung der Konsole (29) verbreitern.

2. Halter für eine Einrichtung in der Luftfahrt, nach Anspruch 1, **dadurch gekennzeichnet, dass** der Flansch (26) in zwei Abschnitte (26a, 26b), die untereinander getrennt und jeweils mit den Rippen verbunden sind, unterteilt ist.

3. Halter für Einrichtungen in der Luftfahrt, nach Anspruch 2, **dadurch gekennzeichnet, dass** die Abschnitte von den Verbindungsstücken mit den Rippen ausgehend in auseinanderlaufende Richtungen verlaufen.

## Claims

1. A bracket (32) for aeronautical equipment (12), including a flange (26) for connection to a supporting structure (9), a console (29) for attaching equipment and an intermediate reinforcing part, where the flange, the reinforcing part and the console are formed from a single, folded metal plate, where the reinforcing part consists of two ribs (27, 28), each extending between the flange and the console, and attached to it by elbow connections (30), most of which are in oblique directions which are not perpendicular to a principal plane of extension of the flange (26) or to a principal plane of extension of the console (29), where the console and the flange have no connection other than the ribs, and where the ribs are connected either side of the console, the ribs being flat and the principal planes of extension of the flange and of the console being mutually perpendicular, the ribs (27, 28) extending in convergent directions, forming an angle other than a straight angle, the console comprising a plurality of means (31) for attaching the equipment, **characterised in that** the console extends with a main extension in a direction perpendicular to the plane of the flange and either side of the flange, and the ribs (27, 28) become larger towards the console (29).

2. A bracket for aeronautical equipment according to claim 1, **characterised in that** the flange (26) is divided into two portions (26a, 26b) which are mutually separated and attached respectively to the ribs.

3. A bracket for aeronautical equipment according to claim 2, **characterised in that** the portions extend in divergent directions from the connections to the ribs.
